# EUROPÄISCHE PATENTSCHRIFT

(11) **EP 1 257 444 B1**
(45) Veröffentlichungstag und Bekanntmachung des Hinweises auf die Patenterteilung: **10.08.2005**
(21) Anmeldenummer: 01999495.3
(22) Anmeldetag: 07.11.2001
(51) Int. Cl.: B60S 1/08

(54) **REGENSENSOR, INSBESONDERE FÜR EIN KRAFTFAHRZEUG**
RAIN SENSOR IN PARTICULAR FOR A MOTOR VEHICLE
DETECTEUR DE PLUIE, NOTAMMENT POUR UN VEHICULE AUTOMOBILE

(30) Priorität: 06.12.2000 DE 10060964
(43) Veröffentlichungstag der Anmeldung: 20.11.2002
(73) Patentinhaber: ROBERT BOSCH GMBH, 70442 Stuttgart (DE)
(72) Erfinder: SAUTTER, Helmut, 71254 Ditzingen (DE); HODAPP, Bruno, 77855 Achern-Oensbach (DE); PIENTKA, Rainer, 77871 Renchen (DE); MEIER, Hans, 77833 Ottersweier (DE); SCHNEIDER, Andreas, 77815 Buehl (DE); BURKART, Manfred, 76473 Iffezheim (DE); THROL, Manfred, D-35578 Wetzlar (DE)
(86) Internationale Anmeldenummer: PCT/DE2001/004182
(87) Internationale Veröffentlichungsnummer: WO 2002/046006

(56) Entgegenhaltungen:
- DE-A- 19 701 258
- DE-A- 19 821 335
- US-A- 5 661 303
- US-A- 5 898 183

## Beschreibung

### Stand der Technik

Die Erfindung betrifft einen Regensensor nach Gattung des unabhängigen Anspruchs. Es sind schon zahlreiche Regensensoren, beispielsweise aus der DE 198 15 748 A1, bekannt, die mit Hilfe eines Senders und eines Empfängers über das Prinzip der Totalreflexion die Benetzung der Windschutzscheibe eines Kraftfahrzeuges messen. Diese weisen einen Lichtleitkörper auf, der im wesentlichen flacher Gestalt ist und etwa parallel zur Oberfläche der Windschutzscheibe auf der Innenseite des Kraftfahrzeugs angeordnet ist. Darüber hinaus ist aus der US-A-5 898 183 ein Regensensor mit den Merkmalen des Oberbegriffs des Anspruchs 1 bekannt.

### Vorteile der Erfindung

Der erfindungsgemäße Regensensor mit den Merkmalen des Hauptanspruchs hat den Vorteil, daß durch verschiedene Strukturen zur Strahlenein- und -auskopplung die jeweiligen Bedürfnisse der Fokussierung berücksichtigt werden können, wodurch sich die Empfindlichkeit des Regensensors verbessert.

Besonders vorteilhaft ist es, wenn die Strukturen zur Einkopplung der Strahlung in die Scheibe sphärischen Charakters sind und die Strukturen zur Auskopplung asphärischen Charakters sind. Auf diese Weise wird eine maximale Lichtmenge in die Windschutzscheibe eingekoppelt und gleichzeitig nur die für die Niederschlagsmessung relevante Strahlung aus der Windschutzscheibe ausgekoppelt. So werden die Meßbereiche auf der Windschutzscheibe vergrößert und damit der Signal-Rausch-Abstand des Regensensorsignals erhöht.

Durch die in den Unteransprüchen aufgeführten Maßnahmen ergeben sich vorteilhafte Weiterbildungen und Verbesserungen der im Hauptanspruch angegebenen Merkmale.

Sind die Strukturen zur Einkopplung der Strahlung als Kugelabschnitte ausgebildet, so sind diese als sphärische Strukturen sehr leicht zu fertigen, insbesondere wenn es sich beim Lichtleitkörper um ein Spritzgußteil handelt.

Weiterhin ist es von Vorteil, wenn die Strukturen zur Auskopplung zylindrische Abschnitte aufweisen, deren Deckfläche als asphärische Linse ausgebildet ist. Die zylindrischen Abschnitte bewirken einen blendenartigen Effekt, so daß nur die gewünschte Strahlung durch den Lichtleitkörper zum Empfänger treten kann. Durch die asphärischen Linsen können die Empfänger näher an den Lichtleitkörper herangeführt werden, als dies mit sphärischen Linsen möglich wäre.

Von besonderem Vorteil ist es dabei, wenn die gebündelten Strahlen außerhalb der geometrischen Mittelachse des zylinderartigen Abschnitts zusammentreffen. Durch diese schielende Linse können die optischen Bauelemente wie Sender und Empfänger noch näher an den Lichtleitkörper herangeführt werden, wodurch Streulichtanteile weiter reduziert werden.

Weist die an der Scheibe ankoppelbare Oberfläche des Lichtleitkörpers eine leichte konvexe Wölbung auf, so werden vorteilhafterweise Luftblasen, welche sich beim Ankoppeln des Lichtleitkörpers an die Scheibe im Kopplungsbereich bilden können, vermieden. Außerdem wird eine Spannung über den gesamten Lichtleitkörper bei der Montage erzeugt, mit dem Effekt, daß beispielsweise temperatur- oder alterungsbedingte Formänderungen ausgeglichen werden.

Sind jeweils mehrere Strukturen zur Strahlenein- und -auskopplung vorgesehen, die jeweils paarweise angeordnet sind, können mehrere Meßstrecken auf engstem Raum angeordnet werden und die Ausmaße des Regensensors auf ein Minimum beschränkt werden. Dies ist insbesondere deshalb vorteilhaft, da der Regensensor auf der Windschutzscheibe so ohne Sichtbehinderung angeordnet werden kann.

Besonders vorteilhaft ist es, wenn je vier Strukturen zur Strahlenein- und -auskopplung vorgesehen sind, die derart angeordnet sind, daß die Meßstrecken in ihrer Projektion auf die Scheibe ein Parallelogramm ausbilden. Durch eine solche Anordnung können mit zwei Sendern und zwei Empfängern vier Meßstrecken realisiert werden, wobei im Zentrum des Parallelogramms genügend Raum, beispielsweise zur Anordnung eines weiteren Sensors oder einer Heizeinrichtung, vorhanden ist. Außerdem werden dadurch, daß jeder Sender in mehreren Meßstrichen sendet und jeder Empfänger aus mehreren Richtungen empfängt, kostenintensive optische Halbleiterbauelemente eingespart.

Ist die an der Scheibe ankoppelbare Oberfläche des Lichtleitkörpers zumindest teilweise mit einer Komponente eines Mehrkomponentenklebstoffes versehen, so kann der Lichtleitkörper schnell und sicher an die Scheibe montiert werden.

### Zeichnung

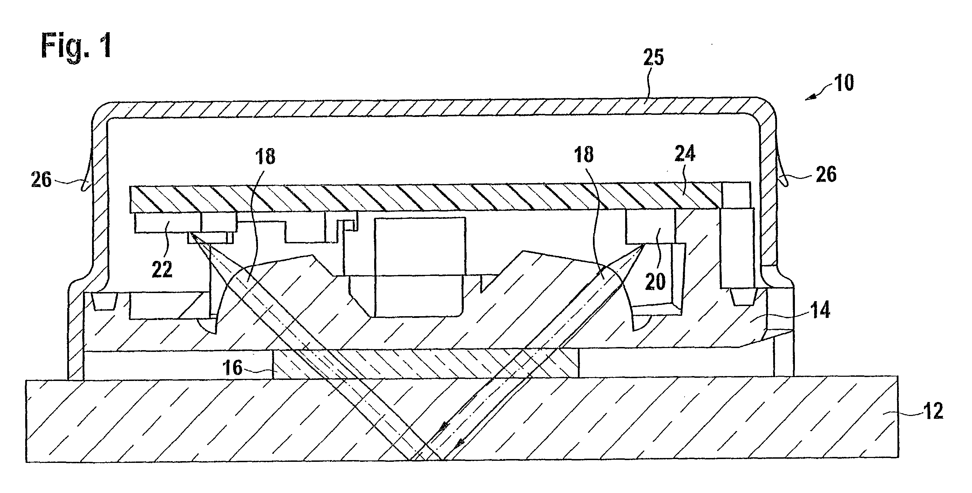

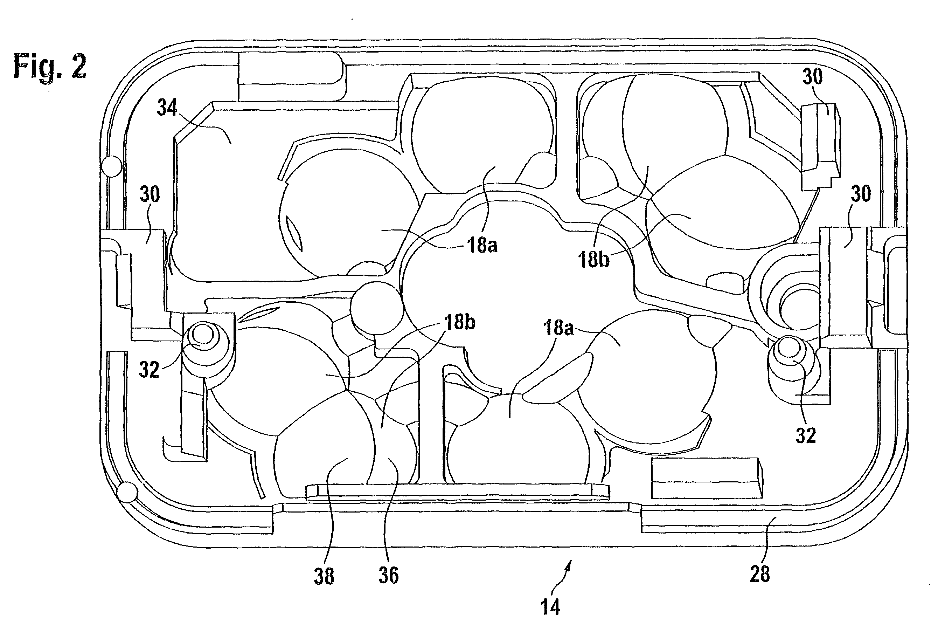

Ein Ausführungsbeispiel der Erfindung ist in der Zeichnung dargestellt und in der nachfolgenden Beschreibung näher erläutert. Figur 1 zeigt einen Schnitt durch einen erfindungsgemäßen Regensensor und Figur 2 einen Lichtleitkörper eines erfindungsgemäßen Regensensors in perspektivischer Darstellung.

### Beschreibung des Ausführungsbeispiels

In Figur 1 ist ein Schnitt durch einen erfindungsgemäßen Regensensor 10 auf einer Scheibe 12 dargestellt. Der Regensensor 10 weist einen Lichtleitkörper 14 auf, der einen Deckel des Regensensors 10 bildet. Mit diesem Lichtleitkörper 14 ist der Regensensor 10 über ein Koppelmedium 16 an die Scheibe 12 geklebt. Es kann natürlich auch ein nicht-klebendes Koppelmedium verwendet werden, wenn die Befestigung beispielsweise über eine separate Befestigungsvorrichtung vorgenommen wird.

Der Lichtleitkörper 14 weist Strukturen 18a, 18b auf, welche das Licht des Senders 20 über das Koppelmedium 16 in die Scheibe 12 einkoppeln und das totalreflektierte Licht wiederum über das Koppelmedium 16 aus der Scheibe 12 auskoppeln und zum Empfänger 22 leiten. Sender 20 und Empfänger 22 sind dabei auf einer gemeinsamen Platine 24, die als Leiterplatte ausgebildet ist, angeordnet. Diese Platine 24 ist im Regensensor 10 innerhalb eines Gehäuses 25 etwa parallel zur Scheibe 12 angeordnet, und zwar so, daß die Sender 20 und die Empfänger 22 etwa über den Strukturen 18a, 18b ausgerichtet sind. Dazu kann der Lichtleitkörper auch nicht gezeichnete Dome aufweisen, die in entsprechende Bohrungen der Platine 24 eingreifen und auf diese Weise das Ausrichten der Sender und Empfänger auf die Strukturen 18a, 18b erleichtern. Die Ausrichtung der Empfänger 22 und/oder Sender 20 wird dabei natürlich so vorgenommen, daß die sensitiven Bereiche der Empfänger 22 und/oder der Sender 20 zur Erzielung einer maximalen Empfindlichkeit im Fokusbereich der strahlungsbündelnden Strukturen 18a, 18b angeordnet sind.

Die Strahlung des Senders 20 wird in einem Winkel von etwa 45° in die Scheibe 12 eingekopplelt, an der benetzbaren Oberfläche der Scheibe 12 in Abhängigkeit der Benetzung zumindest partiell reflektiert und im Winkel von etwa 45° aus der Scheibe 12 ausgekoppelt und dem Empfänger 22 zugeführt.

Das Gehäuse 25 kann an seiner Außenseite auch Nasen 26 aufweisen, die dazu dienen, ein zweites Gehäuse über den gesamten Regensensor 10 zu stülpen, insbesondere, wenn besondere Anforderungen an das Gehäuse gestellt sind. Dies gilt selbstverständlich auch unabhängig von der speziellen Ausbildung des Lichtleitkörpers 14.

Figur 2 zeigt einen Lichtleitkörper 14 in perspektivischer Darstellung en détail. Dieser ist im wesentlichen von rechteckiger Gestalt und mit einer umlaufenden Nut 28 versehen. Im Bereich dieser Nut 28 sind auch weitere Befestigungselemente 30 angeordnet, die den Lichtleitkörper am Gehäuse befestigen. Zur Ausrichtung der in Figur 1 gezeigten Platine 24 weist der Lichtleitkörper die Dome 32 auf, die sich zylindrisch senkrecht zur Scheibe 12 aus dem Lichtleitkörper 14 erheben. Etwa zentrisch im Rechteck des Lichtleitkörpers 14 sind die Strukturen 18a, 18b jeweils paarweise angeordnet. Die Strukturen 18a dienen zum Einkoppeln der Strahlung des Senders 20 und die Strukturen 18b zum Auskoppeln der totalreflektierten Strahlung aus der Scheibe und zum Fokussieren derselben auf den Empfänger 22.

Die Strukturen 18a, die zum Einkoppeln der Strahlung dienen, sind als Kugelabschnitte ausgebildet, welche direkt auf der flachen Grundfläche 34 des Lichtleitkörpers 14 liegen. Da die Sender 20 über den Strukturen 18a angeordnet sind, werden auch entfernte Strahlen noch in die Richtung der Scheibe 12 gebrochen, was die in die Scheibe gekoppelte Gesamtstrahlungsmenge im Verhältnis zur Linsenstruktur nach dem Stand der Technik erhöht.

Die Strukturen 18b, die zum Auskoppeln und Fokussieren der Strahlung auf den Empfänger 22 dienen, bestehen im wesentlichen aus einem zylindrischen Abschnitt 36, an dessen Deckfläche eine asphärische Linse 38 angeformt ist. Da die totalreflektierte Strahlung, welche das Meßsignal widerspiegelt, möglichst genau auf den Empfänger 22 fokussiert werden soll, eignen sich zum Auskoppeln diese asphärischen Strukturen 18b besonders. Die asphärische Linse ist dabei so geformt und angeordnet, daß ihr Fokusbereich die sensitive Fläche des Empfängers 22 genau ausfüllt.

Durch die paarweise Anordnung der Strukturen 18a und 18b werden mit Hilfe von zwei Sendern 20, die jeweils etwa über einem Strukturpaar 18a angeordnet sind und zwei Empfängern, die jeweils etwa über einem Strukturpaar 18b angeordnet sind, vier Meßstrecken erzeugt, welche in ihrer Projektion auf die Scheibe 12 ein Parallelogramm bilden. Im Zentrum des Parallelogramms ist auf diese Weise noch Bauraum vorhanden, in dem ein weiterer Sensor, beispielsweise ein Helligkeitssensor oder ein Temperatursensor, angeordnet werden kann. Denkbar ist aber auch die Anordnung eines Heizelementes zur Heizung der Sensoreinrichtung, bzw. der Scheibe 12 im Meßbereich. Wird ein optischer Sensor in diesem Zentralbereich angeordnet, so kann dieser beispielsweise mittels wandartig erhöhten Stegen optisch von den Meßstrecken abgetrennt werden, um etwaige Störungen der Niederschlagsmessungen durch Einstrahlungen von Tageslicht zu vermeiden. Dies ist jedoch unabhängig von der speziellen Ausgestaltung der Strukturen 18a und 18b. Natürlich ist es auch möglich, die Strukturen 18a, 18b nicht wie in den Figuren linsenartig, sondern auch spiegelartig auszubilden. Auch eine gemischte Ausbildung ist denkbar, bei der ein Teil der Strukturen 18a zur Einkopplung linsenartig und ein weiterer Teil spiegelartig ausgebildet ist. Das Gleiche gilt natürlich auch für die Strukturen 18b zur Auskopplung.

## Patentansprüche

1. Regensensor (10), insbesondere für ein Kraftfahrzeug, mit mindestens einem, im Betriebszustand Strahlung aussendenden Sender (20) und wenigstens einem, für die Strahlung des Senders (20) zumindest teilweise sensitiven Empfänger (22), und einem, im wesentlichen flachen Lichtleitkörper (14), der etwa parallel zu einer Oberfläche einer benetzbaren Scheibe (12) des Kraftfahrzeugs ankoppelbar ist und Strukturen (18a, 18b) zur Ein- und Auskopplung der Strahlung des Senders (20) aufweist, wobei die Strukturen (18a) zur Einkopplung der Strahlung von den Strukturen (18b) zur Auskopplung der Strahlung verschieden sind und strahlungsbündelnde Eigenschaften aufweisen
**dadurch gekennzeichnet, daß** die Strukturen (18a) zur Einkopplung sphärischen Charakters sind und die Strukturen (18b) zur Auskopplung asphärischen Charakters sind.

2. Regensensor (10) nach Anspruch 1, **dadurch gekennzeichnet, daß** die Strukturen (18a) zur Einkopplung der Strahlung als Kugelabschnitt ausgebildet sind.

3. Regensensor (10) nach einem der vorhergehenden Ansprüche, **dadurch gekennzeichnet, daß** die Strukturen (18b) zur Auskopplung einen zylindrischen Abschnitt aufweisen wobei die Deckfläche als asphärische Linse ausgebildet ist.

4. Regensensor (10) nach einem der vorhergehenden Ansprüche, **dadurch gekennzeichnet, daß** die Strukturen (18b) zur Auskopplung einen zylinderartigen Abschnitt, insbesondere einen schiefen Zylinderabschnitt aufweisen, durch den eine geometrische Mittelachse, insbesondere parallel zur Mantelfläche des zylinderartigen Abschnitts konstruierbar ist wobei die Bereiche in die die ausgekoppelte Strahlung gebündelt ist außerhalb der liegen.

5. Regensensor (10) nach einem der vorhergehenden Ansprüche, **dadurch gekennzeichnet, daß** die an der Scheibe (12) ankoppelbare Oberfläche des Lichtleitkörpers eine konvexe Wölbung aufweist.

6. Regensensor (10) nach einem der vorhergehenden Ansprüche, **dadurch gekennzeichnet, daß** mehrere Strukturen (18a, 18b) zur Strahlenein- und auskopplung vorgesehen sind, die jeweils paarweise angeordnet sind.

7. Regensensor (10) nach einem der vorhergehenden Ansprüche, **dadurch gekennzeichnet, daß** je vier Strukturen (18a, 18b) zur Strahlenein- und auskopplung vorgesehen sind, die derart angeordnet sind, daß die durch die Anordnung der Strukturen (18a, 18b) bestimmten Strahlungswege in ihrer Projektion auf die Scheibe (12) ein Parallelogramm ausbilden.

8. Regensensor (10) nach einem der vorhergehenden Ansprüche, **dadurch gekennzeichnet, daß** die an der Scheibe (12) ankoppelbare Oberfläche des Lichtleitkörpers (14) zumindest teilweise mit einer Komponente eines Mehrkomponentenklebstoffs versehen ist.

9. Regensensor (10) nach einem der vorhergehenden Ansprüche, **dadurch gekennzeichnet, daß** jeweils einem Sender (20) und/oder jeweils einem Empfänger (22) mehrere Strukturen (18a, 18b) zugeordnet sind.

## Claims

1. Rain sensor (10), in particular for a motor vehicle, having at least one transmitter (20), which emits radiation in the operating state, and at least one receiver (22), which is at least partially sensitive to radiation from the transmitter (20), and a substantially flat light-guiding element (14) which can be coupled approximately parallel to a surface of a wettable pane (12) of the motor vehicle and has structures (18a, 18b) for coupling the radiation of the transmitter (20) in and out, the structures (18a) for coupling in the radiation being different from the structures (18b) for coupling out the radiation and having radiation-focussing properties, **characterized in that** the structures (18a) for coupling in are of a spherical nature, and the structures (18b) for coupling out are of an aspheric nature.

2. Rain sensor (10) according to Claim 1, **characterized in that** the structures (18a) for coupling in the radiation are designed as a spherical section.

3. Rain sensor (10) according to one of the preceding claims, **characterized in that** the structures (18b) for coupling out have a cylindrical section, the top surface being constructed as an aspheric lens.

4. Rain sensor (10) according to one of the preceding claims, **characterized in that** the structures (18b) for coupling out have a section of cylindrical type, in particular an oblique cylindrical section through which a geometrical central axis can be constructed, in particular parallel to the lateral surface of the section of cylindrical type, the regions into which the coupled-out radiation is focussed lying outside the geometrical axis.

5. Rain sensor (10) according to one of the preceding claims, **characterized in that** the surface of the light-guiding element which can be coupled to the pane (12) has a convex curvature.

6. Rain sensor (10) according to one of the preceding claims, **characterized in that** a number of structures (18a, 18b) which are respectively arranged in pairs are provided for coupling beams in and out.

7. Rain sensor (10) according to one of the preceding claims, **characterized in that** four structures (18a, 18b) each are provided for coupling beams in and out and are arranged in such a way that the beam paths determined by the arrangement of the structures (18a, 18b) form a parallelogram projected onto the pane (12).

8. Rain sensor (10) according to one of the preceding claims, **characterized in that** the surface of the light-guiding element (14) which can be coupled to the pane (12) is provided at least partially with a component of a multicomponent adhesive.

9. Rain sensor (10) according to one of the preceding claims, **characterized in that** a number of structures (18a, 18b) are assigned in each case to one transmitter (20) and/or in each case to one receiver (22).

## Revendications

1. Détecteur de pluie (10), notamment pour un véhicule automobile, comprenant au moins un émetteur (20) de rayonnement à l'état de fonctionnement un rayonnement et au moins un récepteur (22) du moins partiellement sensible de l'émetteur (20), et un guide de lumière (14) pour l'essentiel aplati qui peut être accouplé à peu près parallèlement à la surface d'un pare-brise (12) mouillable du véhicule automobile, et qui présente des structures (18a, 18b) pour introduire et sortir le rayonnement de l'émetteur (20), les structures (18a) pouvant introduire le rayonnement étant différentes des structures (18b) sortant le rayonnement et présentant des propriétés de focalisation,
**caractérisé en ce que**
les structures (18a) pour l'introduction présentent un caractère sphérique et les structures (18b) pour la sortie un caractère asphérique.

2. Détecteur de pluie (10) selon la revendication 1,
**caractérisé en ce que**
les structures (18a) pour l'introduction du rayonnement présentent la forme d'un segment sphérique.

3. Détecteur de pluie (10) selon l'une quelconque des revendications précédentes,
**caractérisé en ce que**
les structures (18b) pour la sortie présentent un segment cylindrique, la surface de couverture étant une lentille asphérique.

4. Détecteur de pluie (10) selon l'une quelconque des revendications précédentes,
**caractérisé en ce que**
les structures (18b) pour la sortie présentent un segment cylindrique, notamment un segment cylindrique oblique permettant de réaliser un axe médian géométrique, notamment parallèlement à la surface d'enveloppe du segment cylindrique, les zones dans lesquelles le rayonnement sorti est focalisé se situant à l'extérieur de celui-ci.

5. Détecteur de pluie (10) selon l'une quelconque des revendications précédentes,
**caractérisé en ce que**
la surface du guide de lumière pouvant être accouplée au pare-brise (12) présente un bombement convexe.

6. Détecteur de pluie (10) selon l'une quelconque des revendications précédentes,
**caractérisé en ce que**
plusieurs structures (18a, 18b) disposées respectivement par paires sont prévues pour introduire et sortir le rayonnement.

7. Détecteur de pluie (10) selon l'une quelconque des revendications précédentes,
**caractérisé en ce que**
respectivement quatre structures (18a, 18b) sont prévues pour introduire et sortir le rayonnement, et sont disposées de telle sorte que les trajectoires de rayonnement déterminées par la disposition des structures (18a, 18b) forment un parallélogramme au niveau de leur projection sur le pare-brise (12).

8. Détecteur de pluie (10) selon l'une quelconque des revendications précédentes,
**caractérisé en ce que**
la surface du guide de lumière (14) pouvant être accouplée au pare-brise (12) vitre est munie du moins partiellement d'un composant d'une colle à plusieurs composants.

9. Détecteur de pluie (10) selon l'une quelconque des revendications précédentes,
**caractérisé en ce que**
plusieurs structures (18a, 18b) sont associées respectivement à chaque émetteur (20) et/ou récepteur (22).
